# EUROPEAN PATENT APPLICATION

(11) **EP 4 635 651 A1**
(43) Date of publication of application: **22.10.2025**
(21) Application number: 23833901.4
(22) Date of filing: 20.10.2023
(51) Int. Cl.: B22F 9/08, B33Y 70/00, C22C 1/04, C22C 21/00, C22C 1/02

(54) **ALUMINIUM MATERIAL FOR ADDITIVE MANUFACTURING AND ITEM MADE OF SAID MATERIAL**

(30) Priority: 12.12.2022 RU 2022132368
(71) Applicant: Obshchestvo S Ogranichennoj Otvetstvennost'Yu "Institut Legkikh Materialov I Tekhnologij", Moscow 119049 (RU)
(72) Inventor: MANN, Viktor Khrist'yanovich, g. Krasnoyarsk, 660111 (RU); RYABOV, Dmitrij Konstantinovich, g. Krasnoyarsk, 660111 (RU); VAKHROMOV, Roman Olegovich, g. Krasnoyarsk, 660111 (RU); GRUSHIN, Ivan Alekseevich, g. Krasnoyarsk, 660111 (RU)
(74) Representative: Atalay, Baris
(86) International application number: PCT/RU2023/050248
(87) International publication number: WO 2024/128937

(57) **Abstract**

The invention relates to metallurgy, in particular to aluminum-based alloys used to produce powders for additive manufacturing, including selective laser melting. The aluminum powder alloy comprises (in wt.%): 0.3-1.5 iron, 0.35-2.6 cerium, and 0.15-0.4 titanium; 0.2-2.0 at least one element from group A comprising manganese, lanthanum and yttrium (in total or individually); 0.6-1.5 at least one element from group B comprising zirconium, vanadium, chromium, hafnium and scandium (in total or individually); optionally: 3-60 ppm hydrogen and 1.5-4.5 magnesium; and aluminum and unavoidable impurities, including 0.2 max. silicon, 0.05 max. copper and 0.05 max. zinc.

## Description

### Field of Invention

This invention relates to metallurgy, in particular, to aluminum-based alloys used to produce powders for part manufacturing using both conventional powder metallurgy technologies and additive technologies, including selective laser melting.

### Prior Art

Aluminum materials are divided into two categories: the alloys that can be hardened, and the alloys that cannot be hardened by solid solution treatment, quenching and subsequent artificial or natural aging. The age-hardenable alloys have better mechanical properties as a large number of nanoscale hardening particles are precipitated during heat treatment. However, quenching of precision parts manufactured by powder metallurgy and additive technologies may result in distortions and defects. There is a need for alloys that do not require quenching. 3D printing and powder metallurgy, in general, can produce rapid solidification alloys containing various elements in concentrations significantly exceeding the equilibrium ones for high strength, but poor ductility. Some applications require highly plastic materials. Selective laser melting and similar 3D metal printing technologies are essentially the depositions of a metal layer on the substrate of the same metal. The challenge is to obtain both the high ductility and strength of the aluminum alloy.

A rapid solidification aluminum alloy containing chromium is known (US Pat. US5049211, publication date: September 17, 1991). The alloy contains 1 to 7 wt% Cr and up to 6 wt% X, where X is selected from refractory metals Nb, Mo, Hf, Ta, and W. The alloy has high strength and good thermal stability. Due to the high content of transition metals, the ductility is low resulting in extremely low impact strength.

Patent EP2112241 (publication date: September 21, 2011) presents an alloy strengthened by L12 phases. The alloy composition is as follows. Nickel: 4-25%; cerium: 2-25%; at least one of the following elements: scandium (0.1-4%); erbium (0.1-20%); thulium (0.1-15%); ytterbium (0.1-25%); and lutetium (0.1-25%), and at least one of the following elements: gadolinium (2-30%); yttrium (2-30%); zirconium (0.5-5%); titanium (0.5-10%); hafnium (0.5-10%); niobium (0.5-5%); and iron (0.5-15%). The alloy is made by fast solidification technology and has high strength. However, due to over-alloying, the final products are extremely difficult to make by selective laser melting or any other technology except for conventional powder metallurgy. Another drawback is that the alloy contains a large number of rare, expensive elements.

A known aluminum alloy for additive technologies (patent EP3406372, publication date: January 1, 2020), consists of the following components (wt.%):

| | |
|---|---|
| Cerium | 2.0-10.0 |
| Titanium | 0.5-2.5 |
| Nickel | 0-3.0 |
| Nitrogen | 0-0.75 |
| others | 0-0.05 |

The rest is aluminum.

The alloy has high heat resistance and, in some versions, high strength. However, the large number of eutectic forming elements reduces the ductility and, consequently, fatigue life. Also, with a large number of alloying elements, the alloy most likely has low corrosion resistance compared to corrosion-resistant aluminum alloys.

Patent application US2021129270 (publication date: May 6, 2021) presents an aluminum material for additive technologies with the following composition (wt.%):

| | |
|---|---|
| Cerium | 0-35 |
| Nickel | 1-35 |
| Manganese | 0-3 |
| Iron | 0-3 |
| Magnesium | 0-2 |
| Zirconium | 0-2 |
| Silicon | 0-1 |
| Chromium | 0-5 |

The rest is aluminum.

Cerium and nickel in the alloy are sufficient to form at least one of the following intermetallic compounds: Al23Ni6Ce4, Al7Ni2Ce, Al20Mn2Ce, or Al3Ni.

The alloy is designed to operate at elevated temperatures. It does not require hardening heat treatment but has low ductility due to the high content of alloying elements.

Another known aluminum alloy for additive manufacturing (US Pat. US2022168811, publication date: June 2, 2022) contains the following elements (wt.%):

| | |
|---|---|
| Titanium | 0.1-15.0 |
| Scandium | 0.1-3.0 |
| Zirconium | 0.1-3.0 |

The rest is aluminum and unavoidable impurities.

With transition metals, the alloy is susceptible to precipitation hardening. Some embodiments of the invention are compositions with low manufacturability. According to the phase diagram, the alloy is within the areas containing 100% of the intermetallic compound with virtually no ductility. It will lead to cracking.

Patent CN110791686 (publication date: February 14, 2020) presents the aluminum powder which is the prototype of this invention. The patent proposes an aluminum powder alloy for additive technologies with the Al-XY composition, where X is one of the following elements: Fe; Co; Ni; and Y is one of the following elements: Sc; Ti; and Zr. The atomic content of element X is 0.1-10%, and that of element Y is 0.1-5%. The rest is aluminum. This material does not require quenching. Since the alloying element contents vary greatly, some compositions have an extremely low elongation, while a high content of X elements significantly deteriorates corrosion resistance.

### Invention Disclosure

The purpose and technical effect of this invention is the creation of an aluminum alloy that can be used as a powder for the production of parts using additive technologies. The alloy has high strength (no less than 320 MPa) without quenching and artificial aging. The material should also have high manufacturability for 3D printing and high corrosion resistance for operating in various corrosion environments.

To achieve the technical effect, a powder aluminum alloy is proposed. The alloy comprises iron and cerium; at least one element from group A comprising manganese, lanthanum and yttrium; at least one element from group B comprising zirconium, vanadium, chromium, hafnium and scandium; optionally: hydrogen and magnesium; and aluminum and unavoidable impurities, including silicon, copper and zinc; said elements having the following concentrations, in wt %:

| | |
|---|---|
| iron | 0.3 - 1.5, |
| cerium | 0.35 - 2.6, |
| titanium | 0.15 - 0.4; |

at least one element from group A comprising

| | |
|---|---|
| manganese, lanthanum and yttrium | 0.2 - 2.0 (either in total or individually); |

at least one element from group B comprising zirconium,

| | |
|---|---|
| vanadium, chromium, hafnium and scandium | 0.6 - 1.5 (either in total or individually); |

optionally:

| | |
|---|---|
| hydrogen | 3 - 60 ppm |
| magnesium | 1.5 - 4.5; and |

aluminum and unavoidable impurities, including

| | |
|---|---|
| silicon, copper and zinc | balance, |

where the content of silicon, copper and zinc is as below:

| | |
|---|---|
| silicon | 0.2 max., |
| copper | 0.05 max., |
| zinc | 0.05 max.; and |

the structure comprises an aluminum solid solution, eutectics, and nanoscale dispersoids of AlB type phases amounting to no more than 10%, said dispersoids being formed with elements from group B.

"Either in total or individually" means the content (amount) of one or more elements (in total) within the range given.

The preferred contents (wt.%) are as follows. Iron: 0.3-1.0; cerium: 0.35-1.0; titanium: 0.15-0.25; at least one group A element: 0.5-2.0; at least one group B element: 0.6-0.8; optionally, magnesium: 2.0-4.0 wt.%.

### Summary of Drawings

Fig. 1 - Cube samples made by selective laser melting. Typical cubes made by 3D printing. A: composition Y; B: composition No. 3.
Fig. 2 - SEM image of the powder after atomization (spraying) and screening (SEM stands for scanning electron microscope).
Fig. 3 - Structures of composition 1, 2, 3, A, B samples. Microstructure of alloys No. 1 (A), No. 5 (B), and No. 6 (C).

### Invention Embodiments

The iron additive in the specified range is required to form the eutectic in order to reduce the hot brittleness and the tendency to hot cracking during rapid solidification. The iron content below this range will result in the formation of a solid solution-like structure at high solidification rates. The excess content reduces corrosion resistance since iron increases the sensitivity of aluminum to pitting corrosion. Although according to the equilibrium phase diagram, the eutectic point in the aluminum-iron system is in the 1.8 wt.% concentration area, the proposed range is sufficient for the formation of eutectics.

The addition of cerium also promotes the formation of eutectics. Cerium also has a much smaller impact on corrosion resistance compared to iron. Besides, cerium can both create a separate eutectic phase with aluminum and partially form ternary phases with aluminum and iron and other elements, including metastable phases. The cerium content is limited to preserve the high ductility which is reduced when a large number of eutectic phases are formed. Cerium mischmetal can be used as an alternative to cerium. The rare earth elements and iron in the mischmetal are also alloying elements and generally do not significantly change the properties of 3D printed products.

The specified amount of titanium forms a fine-grained structure in the printed part. The formation of Al₃Ti nano-dispersed intermetallides makes the part structure fine-grained, which further reduces the susceptibility to hot cracking. Excessive titanium content results in the formation of large undesirable intermetallides. Also, titanium significantly increases the melting point of the alloy, which requires overheating and increases energy costs.

The elements selected from group A (Mn (manganese), La (lanthanum), Y (yttrium)) are eutectic forming additives (they undergo a eutectic transformation in the "aluminum comer" of the phase diagram). These elements improve manufacturability for 3D printing and contribute to additional precipitation hardening. This is because the elements have variable solubility in aluminum at different temperatures. At high solidification rates, these elements tend to form abnormally supersaturated solid solutions. They precipitate from the solid solution with the formation of binary nanoscale phases, which lead to hardening. Since the solubility of these elements is limited even during non-equilibrium solidification, their maximum total content shall be limited to maintain high ductility to avoid cold cracking. To maintain high ductility it is also advisable that the content of a group A element does not exceed its content at the eutectic point indicated on the equilibrium phase diagram, since high solidification rates during both powder atomization and printing may shift this point.

The elements selected from group B (Zr (zirconium), V (vanadium), Cr (chromium), Hf (hafnium), Sc (scandium)) are mostly peritectic forming (except for scandium) as indicated by the two-equilibrium phase diagrams. They have variable solubility in aluminum and form supersaturated solid solutions with a tendency to significantly increase the maximum solubility when quenched in the liquid state at high rates. It is the case for gas atomization and 3D printing. As a result, they form nano-dispersed precipitations during subsequent annealing. These precipitations have a significant hardening effect without a noticeable decrease in ductility. It is very important to limit the maximum content of additives to not exceed the limit of abnormal solubility since the formation of intermetallides by solidification adversely affects the ductility and fatigue life. Experiments have shown that it is advisable to limit the maximum content of each element to a value which is 2-3 times higher than the maximum solubility according to the equilibrium phase diagram. The alloy should contain both a group A element and a group B element since this provides a uniform distribution of various dispersoids both in the grain body and in the areas around the grain boundaries.

Oxygen in the powder occurs as a consequence of atomization. This has a number of positive consequences. Another effect is lower flammability due to the formation of a protective oxide film on the surface of each particle during the oxidation of the liquid drop as it is solidified. For horizontal atomization, small additions of oxygen provide better sphericity of the powder due to higher surface tension. Nevertheless, the oxygen content in the powder should be limited to avoid the formation of large oxide inclusions. They may become the nuclei gas concentration as the powder is remelted during printing.

Hydrogen is a functional additive. On one hand, it has a positive effect on solid solution hardening, which is associated with the extremely small size of the hydrogen atom and its good mobility in the aluminum lattice. On the other hand, when exceeding a certain concentration identified experimentally, it causes a sharp increase in gas porosity and a deterioration of the printed part performance.

It is very important to limit certain unavoidable impurities. Even trace amounts can adversely affect the manufacturability and/or performance of the material. In particular, silicon can increase hot cracking as a result of its reaction with aluminum and iron. In this case, not a double but a ternary phase is formed. Silicon also adversely affects the supersaturation of the solid solution of aluminum with some transition metals, such as scandium. Copper in small amounts increases the tendency to hot cracking. Therefore, its content shall be limited. High copper content has a lower effect on the casting properties and leads to the additional solid solution hardening. However, copper has an extremely negative effect on the overall corrosion resistance. Therefore, this element is not recommended as an additive. Zinc is undesirable since it evaporates easily. When the aluminum powder is heated and remelted, zinc is partially lost resulting in the ingress of contaminants which increase the porosity of the printed part. In addition, for any positive effect on the strength, a significant zinc content is required, which further increases the specific gravity.

The alloy can be alloyed with magnesium within the specified limits for additional hardening by 30-100 MPa without reducing the corrosion resistance or a significant reduction in ductility. This is because magnesium is embedded in the lattice of the aluminum matrix, increasing the strength of the solid solution. To avoid significant powder contamination during printing, it is advisable to limit the magnesium content. Note that even without the optional addition of magnesium, this alloy offers a unique combination of strength, relative elongation, and corrosion resistance.

The alloy can be used to make powders for various 3D metal printing technologies.

Some examples of the invention applications are listed below.

### Example 1.

The alloy was made as follows:
A8 grade aluminum (purity of 99.8%) was melted and heated to at least 800 °C. Then, Fe80F20 and element A (as double aluminum compounds) were added.

The melt was heated to 850 °C and held for 45 minutes. Then, titanium and metallic cerium were added. After slag removal, flux was put on the melt surface (2 kg/t).

The metal was heated to a temperature at least 20 °C above the equilibrium liquidus temperature and held for 30 minutes. The melt was stirred every 15 minutes.

The slug was removed from the surface of the melt and samples were taken for chemical composition analysis.

After the express analysis, the chemical composition was adjusted to meet the specifications.

Then, the melt was atomized through a nozzle to produce a spherical powder. The powders were classified into 20-63 µm particle sizes.

A nitrogen-oxygen mixture (3 vol.% oxygen content) was used as the atomization gas.

Table 1 lists the chemical compositions of the resulting powders.

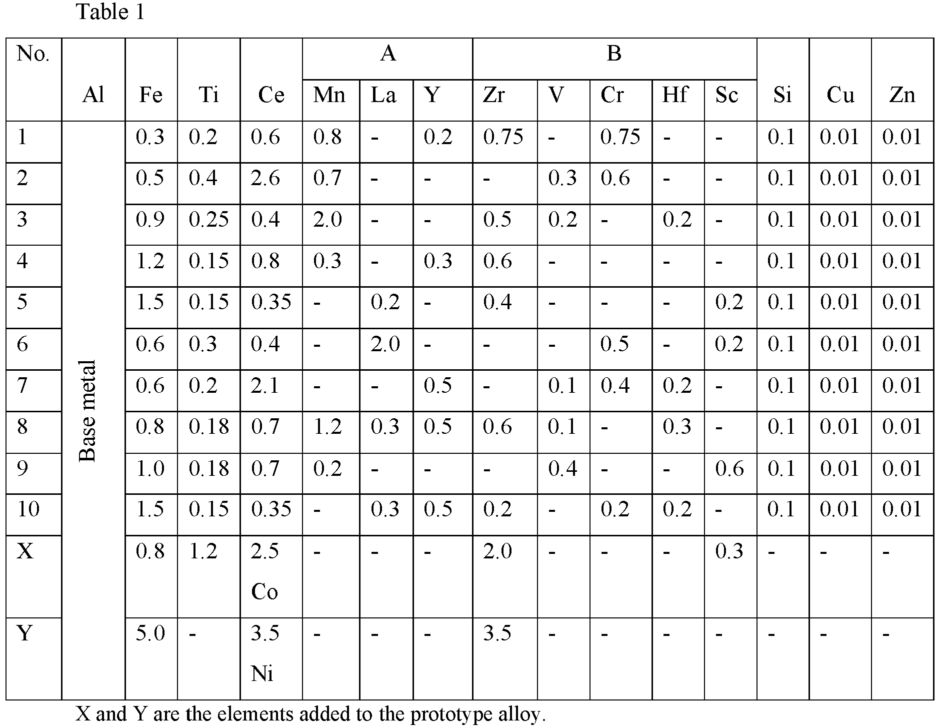

The powders were used to make samples by selective laser melting with an EOS M290 printer (https://www.eos.info/en/additive-manufacturing/3d-printing-metal/eos-metal-systems/eos-m-290). The laser power was 270 W with various hatch distances and a printing speed in the 400-1,500 mm/s range.

The microstructure was studied to assess the quality of the samples. The microsections were prepared in the standard way. The unetched surface was analyzed using an inverted metallographic microscope. For microstructural studies, 10x10x10 mm cubes were printed. The criteria for selecting the best printing parameters were no cracking and minimum porosity.

Cylinders 12 mm in diameter and 90 mm in height were printed in the XY plane under the best printing parameters. After printing, the parts were removed for heat treatment (annealing). Cylindrical samples were cut out of the printed parts for tensile testing in accordance with GOST 1497. The results are presented in Table 2.

**Table 2**

| Alloy | Tensile strength, MPa | Yield strength, MPa | Relative elongation, % | Structure | |
|---|---|---|---|---|---|
| | | | | cracks | Porosity, total% |
| 1 | 355 | 250 | 24.3 | No | 0.17 |
| 2 | 380 | 257 | 18.6 | No | 0.19 |
| 3 | 368 | 273 | 20.1 | No | 0.24 |
| 4 | 432 | 285 | 20.6 | No | 0.20 |
| 5 | 445 | 368 | 19.7 | No | 0.22 |
| 6 | 428 | 336 | 23.8 | No | 0.21 |
| 7 | 378 | 266 | 19.7 | No | 0.3 |
| 8 | 380 | 269 | 22.6 | No | 0.26 |
| 9 | 475 | 399 | 18.9 | No | 0.23 |
| 10 | 396 | 305 | 21.0 | No | 0.17 |
| X | 460 | 320 | 1.2 | No | 0.34 |
| Y | - | - | - | Cold cracks caused by internal stress | |

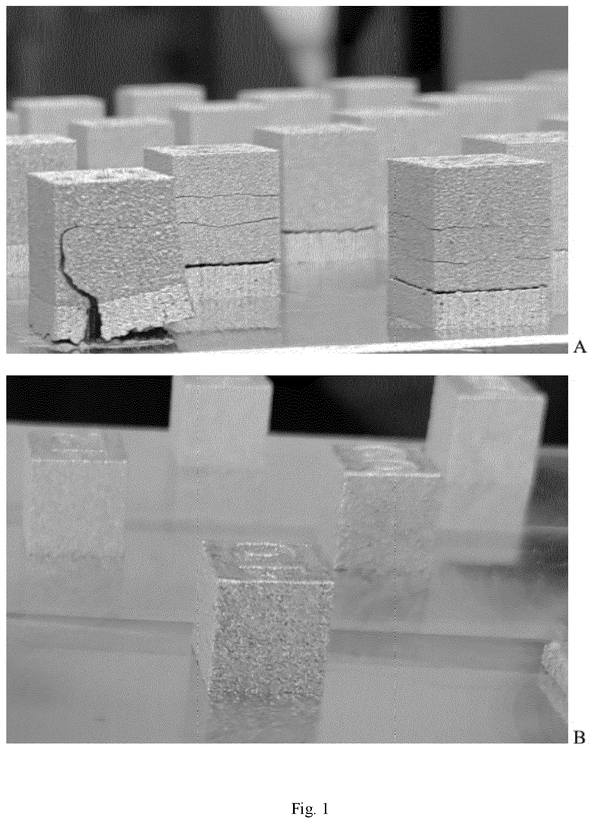

As we compare the values listed in Table 2, limited alloying, optimal selection of the alloying elements, and their contents result in a high relative elongation value and satisfactory strength. All the test alloys are suitable for 3D printing and do not require quenching. It should be noted that the strong over-alloying of alloy Y (Table 2) made it unsuitable for 3D printing. Fig. 1 shows the cube samples with and without cracks.

The typical content of the Y element binary phases which are peritectic forming (except for scandium) is up to 10%, which provides high strength.

### Example 2.

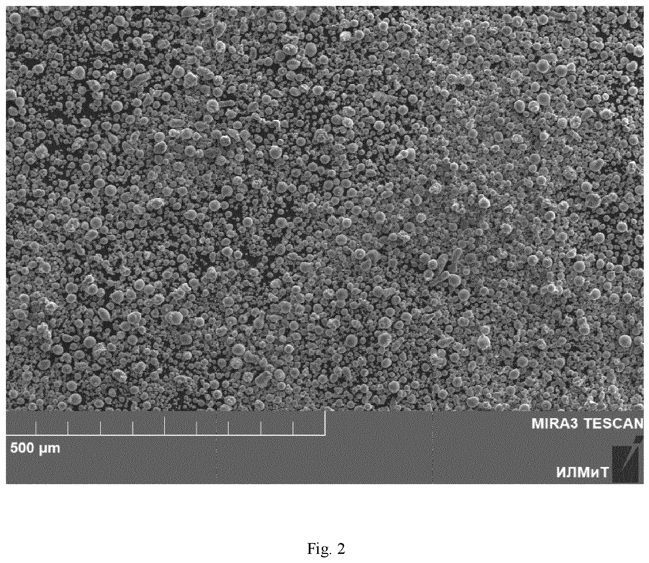

The aluminum alloy was prepared similarly to Example 1 from the same materials. Before atomization, carnallite flux was applied to the melt surface. After the flux completely covered the metal surface, magnesium was added to the melt. After the magnesium was melted, the melt was thoroughly stirred, the slug was removed, and the temperature was raised to no less than 40 °C above the liquidus temperature. The melt was atomized by an argon-oxygen jet containing 0.3 vol.% oxygen. As a result, the spherical powders shown in Fig. 2 were produced. Their chemical compositions are listed in Table 3. The oxygen content in all the powders in the table varied from 0.01 to 0.3 wt.% depending on the oxygen content in the atomization gas jet. The hydrogen content was at the level of 3-60 ppm.

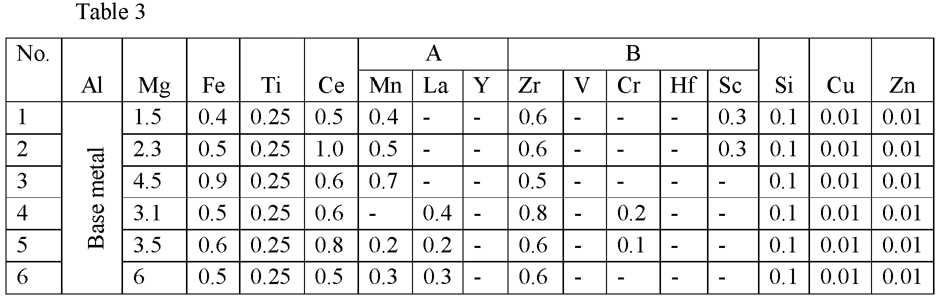

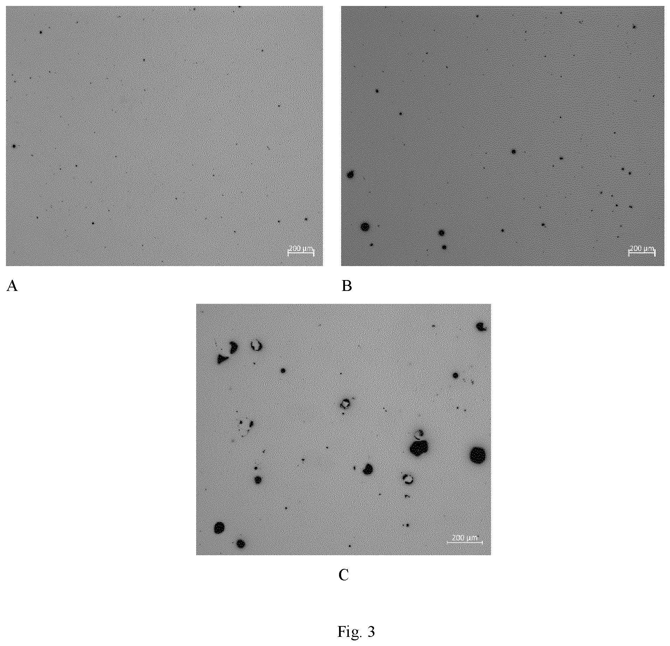

The powder was screened into D50=35 µm and D50=100 µm sizes. The powder with D50=35 µm (15-45 µm particle size) was used to print cylindrical samples for tensile tests. The tensile tests were performed at room temperature in accordance with GOST 1497 after annealing to relieve stress and precipitate the dispersoids. The test results are listed in Table 4. Also, Table 4 lists the porosity. Fig. 3 shows the typical microstructures of the samples.

**Table 4**

| Alloy | Tensile strength, MPa | Yield strength, MPa | Relative elongation,% | Porosity total,% |
|---|---|---|---|---|
| 1 | 402 | 367 | 21.2 | 0.20 |
| 2 | 428 | 382 | 22.5 | 0.21 |
| 3 | 432 | 337 | 16.2 | 0.28 |
| 4 | 428 | 324 | 19.4 | 0.26 |
| 5 | 411 | 320 | 21.3 | 0.31 |
| 6 | 445 | 342 | 11.8 | 0.83 |

The addition of magnesium positively affects the strength and has virtually no severe effect on relative elongation. However, high concentrations of magnesium result in a significant deterioration of the printed part quality, which is associated with a high tendency of magnesium vapors to evaporate from the liquid melt. It leads to the formation of a large amount of impurities in the powder emitted as the laser beam hits the powder layer. Therefore, the magnesium content shall also be limited.

### Example 3.

The castings (refer to Table 5 for chemical composition) were treated in an induction furnace using A85 grade aluminum and charge materials as alloys or commercial purity metals. The samples were loaded into the atomizer, melted, overheated to a temperature at least 25 °C higher than the equilibrium liquidus temperature, and atomized by a nitrogen flow. The resulting powders were classified to separate the 20-63 µm particle size and then were used to print cubes with the EOS M290 SLM machine. The printing parameters were selected from Example 1. The cubes were cut in half along the XZ plane, ground, and polished for microstructural studies and defect identification. The sections were examined without etching with an inverted metallographic microscope in a bright field. Table 5 summarizes porosity and hot cracking detection results, the level of hydrogen was 10-50 ppm.

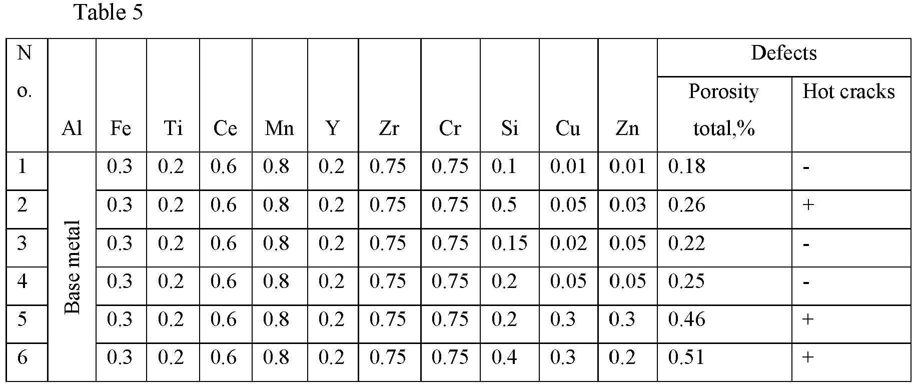

Depending on the alloying element, the higher content of impurities leads to undesirable effects and deteriorates the manufacturability. Although hot cracking can be suppressed by properly selecting the printing parameters (reducing the scanning speed, etc.), excessive amounts of impurities are undesirable. Another negative effect is higher porosity caused by the higher content of burnt particles that contaminate the top powder layer.

### Example 4.

Alloy No. 3 (Example 3) was made from grade A7 aluminum, and AlTi5, AlY10, AlZr10, and AlCr10 additives. The iron and manganese were commercially pure. Cerium was replaced with mischmetal. After the aluminum melted at 830 °C, all the additives except for the mischmetal were added. After melting, the melt was stirred and settled at 870 °C for no less than 30 minutes. Afterward, flux and mischmetal were added. The melt temperature was raised to 950 °C, the slug was removed, a sample was taken for a chemical composition analysis, and the atomization was started. A nitrogen-oxygen mixture (oxygen content: 2 vol.%) was used for atomization. The atomization produced a metal powder containing 0.075 wt.% oxygen. The 15-63 µm particle size powder was poured into the EOS M290 machine to print various parts and test samples. The samples were annealed in a forced convection furnace at 350-420 °C. The samples were tested for tension and corrosion resistance by immersing for 45 days in a 1N aqueous solution of NaCl with the addition of 0.3% H2O2. The corrosion rate was estimated by weighing the sample before and after the test. The results are presented in Table 6.

The alloy has high strength and ductility. Its corrosion resistance is similar to that of 6XXX grade aluminum alloys. The printed parts may have many applications including aerospace, automotive, and mechanical engineering.

**Table 6**

| Tensile strength, MPa | Yield strength, MPa | Relative elongation,% | Porosity total,% | Corrosion rate, g/cm², 24 h. |
|---|---|---|---|---|
| 426 | 319 | 17.9 | 0.22 | 0.57 |

Subject to the disclosed scope of claims, legal protection is sought for the powdered aluminum alloy comprising iron and cerium; at least one element from group A comprising manganese, lanthanum and yttrium; at least one element from group B comprising zirconium, vanadium, chromium, hafnium and scandium; optionally: hydrogen and magnesium; and aluminum and unavoidable impurities, including silicon, copper and zinc; said elements having the following concentrations, in wt %:

| | |
|---|---|
| iron | 0.3 - 1.5, |
| cerium | 0.35 - 2.6, |
| titanium | 0.15 - 0.4; |

at least one element from group A comprising

| | |
|---|---|
| manganese, lanthanum and yttrium | 0.2 - 2.0 (either in total or individually); |

at least one element from group B comprising zirconium,

| | |
|---|---|
| vanadium, chromium, hafnium and scandium | 0.6 - 1.5 (either in total or individually); |

optionally:

| | |
|---|---|
| hydrogen | 3 - 60 ppm |
| magnesium | 1.5 - 4.5; and |

aluminum and unavoidable impurities, including

| | |
|---|---|
| silicon, copper and zinc | balance, |

where the content of silicon, copper and zinc is as below:

| | |
|---|---|
| silicon | 0.2 max., |
| copper | 0.05 max., |
| zinc | 0.05 max.; and |

the structure comprises an aluminum solid solution, eutectics, and nanoscale dispersoids of AlB type phases amounting to no more than 10%, said dispersoids being formed with elements from group B.

The preferred embodiment is the alloy with 0.3-1.0 wt.% iron, 0.35-1.0 wt.% cerium and 0.15-0.25 wt.% titanium, 0.5-2.0 wt.% at least one group A element, 0.6-0.8 wt.% at least one group B element, and, optionally, 2.0-4.0 wt.% magnesium. The aluminum alloy powder is produced by gas atomization using nitrogen or argon, or a mixture of these gases with oxygen. Therefore, the powder additionally contains 0.01-0.3 wt.% oxygen. As a rule, the average particle size of the powder is 20-100 µm. A part made from the powder is made by additive technologies and has a strength of at least 320 MPa after annealing.

The proposed aluminum alloy can be used as a powder to make parts by additive manufacturing. It has high strength without quenching or artificial aging. It is suitable for 3D printing and shows high corrosion resistance for operating in adverse environments.

## Claims

1. An aluminum powder alloy comprising iron and cerium; at least one element from group A comprising manganese, lanthanum and yttrium; at least one element from group B comprising zirconium, vanadium, chromium, hafnium and scandium; optionally: hydrogen and magnesium; and aluminum and unavoidable impurities, including silicon, copper and zinc; said elements having the following concentrations, in wt. %:
| | |
|---|---|
| iron | 0.3 - 1.5, |
| cerium | 0.35 - 2.6, |
| titanium | 0.15 - 0.4; |
at least one element from group A comprising
| | |
|---|---|
| manganese, lanthanum and yttrium | 0.2 - 2.0 (either in total or individually); |
| at least one element from group B comprising zirconium, | |
| vanadium, chromium, hafnium and scandium | 0.6 - 1.5 (either in total or individually); |
optionally:
| | |
|---|---|
| hydrogen | 3 - 60 ppm |
| magnesium | 1.5 - 4.5; and |
aluminum and unavoidable impurities, including
| | |
|---|---|
| silicon, copper and zinc | balance, |
where the content of the silicon, copper and zinc is as below:
| | |
|---|---|
| silicon | 0.2 max., |
| copper | 0.05 max., |
| zinc | 0.05 max.; and |
and the structure comprises an aluminum solid solution, eutectics, and nanoscale dispersoids of AlB type phases amounting to no more than 10%, said dispersoids being formed with elements from group B.

2. The aluminum alloy of claim 1, wherein said aluminum alloy comprises:
| | |
|---|---|
| iron | 0.3-1.0 wt.%, |
| cerium | 0.35-1.0 wt.%, |
| titanium | 0.15-0.25 wt %; |
| at least one group A element | 0.5-2.0 wt.%; |
| at least one group B element | 0.6-0.8 wt.%; and |
| optionally, magnesium | 2.0-4.0 wt.%. |

3. The aluminum alloy of claim 2, wherein said aluminum alloy comprises manganese as a group A element, and zirconium and vanadium as a group B element.

4. A powder manufactured from the aluminum alloy of any of claims 1-3 by gas atomization using nitrogen or argon or a mixture of said gases with oxygen, and said powder additionally comprising 0.01-0.3 wt.% oxygen.

5. The powder of claim 4, wherein the average particle size of said powder is 20-100 µm.

6. A part manufactured from a powder from an aluminum alloy by using additive technologies, wherein said part is manufactured from the powder of claim 4, and said part having a strength of no less than 320 MPa after annealing.
